# EUROPEAN PATENT SPECIFICATION

(11) **EP 2 366 612 B1**
(45) Date of publication and mention of the grant of the patent: **17.04.2013**
(21) Application number: 11156140.3
(22) Date of filing: 28.02.2011
(51) Int. Cl.: B62J 6/02

(54) **Headlamp for two-wheel vehicles**
Scheinwerfer für Zweiradfahrzeuge
Phare pour véhicules à deux roues

(30) Priority: 02.03.2010 IT MI20100336
(43) Date of publication of application: 21.09.2011
(73) Proprietor: Ecie Electric Components, and Instruments Europe S.R.L., 20020 Lainate (MI) (IT)
(72) Inventor: Delfi, Luigi, 20020, Lainate (MI) (IT)
(74) Representative: Raimondi, Margherita

(56) References cited:
- EP-A1- 1 798 467
- EP-A1- 1 970 617
- EP-A1- 2 039 992
- US-A1- 2009 290 372

## Description

### DESCRIPTION

The present invention relates to a multifunctional LED headlamp for two-wheel vehicles.

It is known in the technical sector of motorcycles that there exists the need to equip them with a front light source - so-called headlamp - which is able to provide different types of illumination depending on the different daytime or night-time requirements and/or the different environmental conditions resulting from the presence of clouds, fog, tunnels and the like.

It is likewise known that there exist for this purpose headlamps of various kinds having a reflective body provided internally with light source(s) able to emit light of the dipped beam, full beam, DRL (daytime running lamp) and directional indicator and/or sidelight type, the light rays of which strike the reflective surface at various angles and are reflected in a given direction which may or may not be parallel to the optical axis of the headlamp.

Also known among the headlamps available in the art are those in which the light source consists of LEDs (Light Emitting Diodes) which allow sufficiently powerful light to be produced without the substantial need for maintenance since they are not subject to wear like filament lamps.

Although performing their function, these LED headlamps nevertheless have the drawback that they are unable to provide different light combinations such as dipped beam / full beam or dipped beam / sidelights or the like, while maintaining small dimensions as required in most applications particularly in the case of two-wheel vehicles. Examples of the prior art in relation to the preamble of Claim 1 are for example known from EP 2, 039, 992 and US 2009/0290372 in which in order to obtain the two different types of illumination it was required to double the dimensions of the headlamp either in the vertical direction or in the horizontal direction in accordance with the layouts illustrated.

The technical problem which is posed, therefore, is to provide a headlamp for two-wheel vehicles able to provide different types of constant-output illumination, which has small dimensions, is easy and inexpensive to produce and assemble and can be easily installed also on already existing motorcycles without the need for special adaptation.

In connection with this problem it is also required that the headlamp should allow effective dissipation of heat externally without the need for additional means.

These results are achieved according to the present invention by a headlamp for two-wheel vehicules according to the features of Claim 1.

Further details may be obtained from the following description of a non-limiting example of embodiment of the subject of the present invention provided with reference to the accompanying drawings in which:
- Figure 1:: shows a front view of the headlamp according to the present invention;
- Figure 2:: shows a side view of the headlamp according to Fig. 1; and
- Figure 3:: shows a cross-section along the plane indicated by the line III-III in Fig. 1.

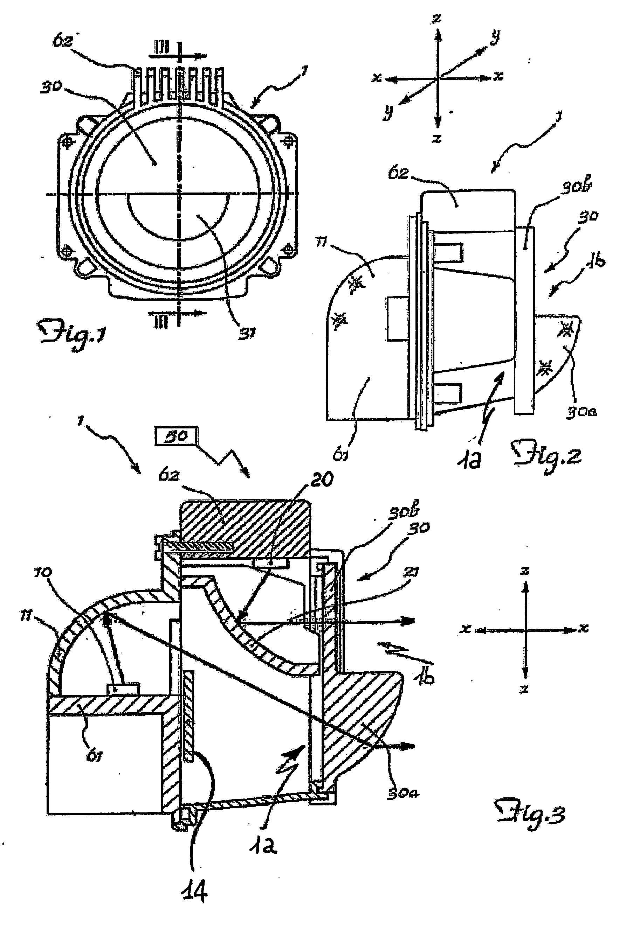

As shown in Fig. 1 and assuming solely for the sake of convenience of the description a set of three axes in the longitudinal direction X-X, parallel to the direction of the light rays emitted by the headlamp, transverse direction Y-Y, perpendicular to the preceding direction, and vertical direction Z-Z, perpendicular to the plane of the longitudinal X-X and transverse Y-Y direction, respectively, the headlamp according to the invention comprises essentially a containing body 1 provided internally with the following:
- at least one first light source 10 of the LED type associated with a respective reflector 11 which captures the rays, reflecting them towards a first bottom emission zone 1a; preferably, in accordance with the layouts shown in the figures, the reflector 11 has a concavity directed downwards;
- a first hybrid lens 30a of the aspherical type, associated with the first light source 10 and arranged, in accordance with the layouts shown for the example described, in a bottom position with respect to the plane of emission of the headlamp;
- at least one second light source 20 of the LED type associated with a respective second aspherical reflector 21 which captures the rays emitted by the source 20, reflecting them towards a second top emission zone 1b; preferably, in accordance with the layouts shown in the figures, the reflector 21 has a concavity directed upwards;
- a second flat lens 30b, associated with the second light source 20 and arranged, in accordance with the layouts shown for the example described, in a top position with respect to the first lens 30a.

Conveniently, the two lens 30a and 30b may be formed as one body 30 with the two constructional forms - aspherical and flat - such that during use the former is situated underneath the latter.

As shown, it is envisaged, according to the invention, that the second light source 20, the second aspherical reflector 21 and the second lens 30b are arranged in the volume of the headlamp in front of the first reflector 11 in the longitudinal direction X-X and above the first lens 30a in the vertical direction Z-Z, so as to allow recovery of the volume of the headlamp entirely occupied in the prior art by the first light source alone with associated reflector and lens.

According to a preferred embodiment it is also envisaged that a screen 14 for intercepting the light beam for the dipped-beam function is arranged in front of the first light source 10.

It is envisaged moreover that the LEDs are associated with control means 50 - only schematically shown in Fig. 3 - suitable for performing selective activation of the LEDs so as to produce light emission conditions for example of the dipped beam or full beam type, if the device is configured for operation as a vehicle headlamp.

It is envisaged moreover that the rear part of the body 1 is provided with a first dissipator 61 in contact with the first light source 10 and directly connected to the outside and the top part of the body 1 of the headlamp is provided with a second dissipator 62, in contact with the second light source 20 and directly connected to the outside; in this way cooling of the headlamp may be performed without the need for additional motorized devices which require an increase in the dimensions of the headlamp and electric power with a consequent increase in components and costs.

It is therefore clear how with the headlamp according to the invention it is possible to obtain all the advantages arising from the use of at least two different light sources of the LED type, in order to achieve different light emission combinations by means of simple control of the power supply of the LEDs, while ensuring particularly small overall dimensions of the headlamp itself, said factor being particularly relevant in the case of applications involving two-wheel vehicles where there is a lack of bodywork space for an increase in size of said headlamps.

## Claims

1. Headlamp for two-wheel vehicles, comprising a containing body (1) provided internally with at least one first light source (10) of the LED type associated with a respective first reflector (11) able to reflect light rays in a first emission zone (1a), at least one second light source (20) of the LED type associated with a respective second reflector (21) able to deviate the light rays of the at least one second light source (20) towards a second emission zone (1b), there being provided a hybrid lens (30) comprising an aspherical part (30a) and a flat part (30b), which in use are respectively arranged in front, along a longitudinal direction (X-X) parallel to the direction of the light rays emitted by the headlamp, of said first emission zone (1a) and said second emission zone (1b), and means (50) for controlling the emission of the at least one first light source (10) and at least one second light source (20), **characterized in that** said aspherical part (30a) of the hybrid lens (30) is, in use, arranged below the flat part (30b) of the hybrid lens (30) in a vertical direction (Z-Z) and **in that** said at least one second light source (20), second reflector (21) and flat part (30b) of the hybrid lens (30) are, in use, arranged in the volume of the headlamp in front of the first reflector (11) in the longitudinal direction (X-X) parallel to the direction of the light rays emitted by the headlamp and above the aspherical part (30a) of the hybrid lens (30) in the vertical direction (Z-Z).

2. Headlamp according to Claim 1, **characterized in that**, in use, said first reflector (11) has a concavity directed downwards.

3. Headlamp according to Claim 1, **characterized in that**, in use, said second reflector (21) has a concavity directed upwards.

4. Headlamp according to Claim 1, **characterized in that** the aspherical part (30a) of the hybrid lens (30) and the flat part (30b) of the hybrid lens (30) are formed as one body (30).

5. Headlamp according to Claim 1, **characterized in that** a first dissipator (61) is arranged, in use, at the rear of the containing body (1), in contact with the at least one first light source (10) and directly connected to the outside.

6. Headlamp according to Claim 5, **characterized in that** said first dissipator (61) is incorporated in the first reflector (11).

7. Headlamp according to Claim 1, **characterized in that** a second dissipator (62) is arranged, in use, at the top of the containing body (1), in contact with the at least one second light source (20) and directly connected to the outside.

8. Headlamp according to Claim 1, **characterized in that** it comprises a screen (14) for intercepting the light rays, arranged, in use, in front of the at least one first light source (10) along the longitudinal direction (X-X) parallel to the direction of the light rays emitted by the headlamp.

## Patentansprüche

1. Scheinwerfer für Zweiradfahrzeuge umfassen einen Fassungskörper (1), der innen ausgestattet ist mit mindestens einer ersten Lichtquelle (10) des LED-Typs, der jeweils ein erster Reflektor (11) beigefügt ist, der in der Lage ist, Lichtstrahlen in einer ersten Emissionszone (1a) zu reflektieren, mindestens einer zweiten Lichtquelle (20) des LED-Typs, der jeweils ein zweiter Reflektor (21) beigefügt ist, der in der Lage ist, die Lichtstrahlen der mindestens einen zweiten Lichtquelle (20) in Richtung einer zweiten Emissionszone (1b) zu reflektieren, wobei dort eine Hybridlinse (30) bereitgestellt ist, die einen asphärischen Teil (30a) und einen flachen Teil (30b) umfasst, die bei Gebrauch, entlang einer Längsrichtung (X-X) parallel zu der Richtung der von dem Scheinwerfer emittierten Lichtstrahlen, jeweils vor der ersten Emissionszone (1a) und der zweiten Emissionszone (1b) angeordnet sind, und mit Mitteln (50) zur Kontrolle der Emission der mindestens einen ersten Lichtquelle (10) und der mindestens einen zweiten Lichtquelle (20), **dadurch gekennzeichnet, dass** der asphärische Teil (30a) der Hybridlinse (30), bei Gebrauch, unterhalb des flachen Teils (30b) der Hybridlinse (30) in einer vertikalen Richtung (Z-Z) angeordnet ist und dadurch, dass mindestens eine zweite Lichtquelle (20), ein zweiter Reflektor (21) und ein flacher Teil (30b) der Hybridlinse (30), bei Gebrauch, in dem Volumen des Scheinwerfers vor dem ersten Reflektor (11) in der Längsrichtung (X-X) parallel zu der Richtung der von dem Scheinwerfer emittierten Lichtstrahlen und oberhalb des asphärischen Teils (30a) der Hybridlinse (30) in der vertikalen Richtung (Z-Z) angeordnet sind.

2. Scheinwerfer nach Anspruch 1, **dadurch gekennzeichnet, dass**, bei Gebrauch, der erste Reflektor (11) eine nach unten gerichtete Konkavität aufweist.

3. Scheinwerfer nach Anspruch 1, **dadurch gekennzeichnet, dass**, bei Gebrauch, der zweite Reflektor (21) eine nach oben gerichtete Konkavität aufweist.

4. Scheinwerfer nach Anspruch 1, **dadurch gekennzeichnet, dass** der asphärische Teil (30a) der Hybridlinse (30) und der flache Teil (30b) der Hybridlinse (30) als ein Körper (30) ausgebildet sind.

5. Scheinwerfer nach Anspruch 1, **dadurch gekennzeichnet, dass** ein erster Kühlkörper (61), bei Gebrauch, an der Rückseite des Fassungskörpers (1) in Kontakt mit der mindestens einen ersten Lichtquelle (10) und direkt verbunden mit der Außenseite angeordnet ist.

6. Scheinwerfer nach Anspruch 5, **dadurch gekennzeichnet, dass** der erste Kühlkörper (61) in den ersten Reflektor (11) eingearbeitet ist.

7. Scheinwerfer nach Anspruch 1, **dadurch gekennzeichnet, dass** ein zweiter Kühlkörper (62), bei Gebrauch, oben auf dem Fassungskörper (1) in Kontakt mit der mindestens einen zweiten Lichtquelle (20) und direkt verbunden mit der Außenseite angeordnet ist.

8. Scheinwerfer nach Anspruch 1, **dadurch gekennzeichnet, dass** er eine Blende (14) zum Unterbrechen der Lichtstrahlen umfasst, der, bei Gebrauch, vor der mindestens einen ersten Lichtquelle (10) entlang der Längsrichtung (X-X) parallel zu der Richtung der von dem Scheinwerfer emittierten Lichtstrahlen angeordnet ist.

## Revendications

1. Phare destiné à des véhicules à deux roues, comportant un élément conteneur (1) pourvu, à l'intérieur, d'au moins une première source de lumière (10) du type LED associée à un premier réflecteur respectif (11) capable de réfléchir les rayons lumineux dans une première zone d'émission (1a), d'au moins une seconde source de lumière (20) du type LED associée à un second réflecteur respectif (21) capable de dévier les rayons lumineux de la, au moins une, seconde source de lumière (20) vers une seconde zone d'émission (1 b), là où se trouve prévue une lentille hybride (30) comportant une partie asphérique (30a) et une partie plate (30b), lesquelles en fonctionnement sont respectivement disposées en face, suivant une direction longitudinale (X-X) parallèle à la direction des rayons lumineux émis par le phare, de ladite première zone d'émission (1a) et de ladite seconde zone d'émission (1 b), et des moyens (50) permettant de commander l'émission de la, au moins une, première source de lumière (10) et de la, au moins une, seconde source de lumière (20), **caractérisé en ce que** ladite partie asphérique (30a) de la lentille hybride (30) est, en fonctionnement, disposée au-dessous de la partie plate (30b) de la lentille hybride (30) dans une direction verticale (Z-Z) et **en ce que** ladite au moins une seconde source de lumière (20), ledit second réflecteur (21) et ladite partie plate (30b) de la lentille hybride (30), sont, en fonctionnement, agencés dans le volume du phare en face du premier réflecteur (11) dans la direction longitudinale (X-X) parallèle à la direction des rayons lumineux émis par le phare et au-dessus de la partie asphérique (30a) de la lentille hybride (30) dans la direction verticale (Z-Z).

2. Phare selon la revendication 1, **caractérisé en ce que**, en fonctionnement, ledit premier réflecteur (11) présente une concavité dirigée vers le bas.

3. Phare selon la revendication 1, **caractérisé en ce que**, en fonctionnement, ledit second réflecteur (21) présente une concavité dirigée vers le haut.

4. Phare selon la revendication 1, **caractérisé en ce que** la partie asphérique (30a) de la lentille hybride (30) et la partie plate (30b) de la lentille hybride (30) sont formées en une seule pièce (30).

5. Phare selon la revendication 1, **caractérisé en ce que** un premier dissipateur (61) est agencé, en fonctionnement, au niveau de l'arrière de l'élément conteneur (1), en contact avec la, au moins une, première source de lumière (10) et directement connecté avec l'extérieur.

6. Phare selon la revendication 5, **caractérisé en ce que** ledit premier dissipateur (61) est incorporé dans le premier réflecteur (11).

7. Phare selon la revendication 1, **caractérisé en ce que** un second dissipateur (62) est disposé, en fonctionnement, au niveau du dessus de l'élément conteneur (1), en contact avec la, au moins une, seconde source de lumière (20) et directement connecté avec l'extérieur.

8. Phare selon la revendication 1, **caractérisé en ce qu'**il comporte un écran (14) pour intercepter les rayons lumineux, disposé en fonctionnement, en face de la, au moins une, première source de lumière (10) suivant la direction longitudinale (X-X) parallèle à la direction des rayons lumineux émis par le phare.
